# EUROPÄISCHE PATENTSCHRIFT

(11) **EP 0 972 259 B1**
(45) Veröffentlichungstag und Bekanntmachung des Hinweises auf die Patenterteilung: **26.09.2001**
(21) Anmeldenummer: 98919243.0
(22) Anmeldetag: 08.04.1998
(51) Int. Cl.: G06F 17/30

(54) **VERFAHREN ZUR REDUZIERUNG DES SPEICHERBEDARFS UND AUFBAU EINER DATENBANK**
METHOD FOR REDUCING REQUIRED MEMORY CAPACITY AND CREATION OF A DATABASE
PROCEDE POUR REDUIRE L'ENCOMBREMENT EN MEMOIRE ET CONSTITUTION D'UNE BANQUE DE DONNEES

(30) Priorität: 09.04.1997 DE 19714719
(43) Veröffentlichungstag der Anmeldung: 19.01.2000
(73) Patentinhaber: Data Square Corporation, Miami, FL 33139 (US)
(72) Erfinder: EL-GAZZAR, Amin, 33149 Key Biscane (US)
(74) Vertreter: MÜLLER & HOFFMANN Patentanwälte
(86) Internationale Anmeldenummer: EP9802062
(87) Internationale Veröffentlichungsnummer: WO9845790

(56) Entgegenhaltungen:
- PATENT ABSTRACTS OF JAPAN vol. 097, no. 008, 29.August 1997 & JP 09 091300 A (HITACHI LTD), 4.April 1997,
- ANONYMOUS: "Algorithm for Compressing Static Sets" IBM TECHNICAL DISCLOSURE BULLETIN, Bd. 30, Nr. 10, März 1988, NEW YORK, US, Seiten 377-381, XP002073242
- PATENT ABSTRACTS OF JAPAN vol. 018, no. 197 (P-1723), 6.April 1994 & JP 06 004070 A (CANON INC), 14.Januar 1994,
- PATENT ABSTRACTS OF JAPAN vol. 096, no. 002, 29.Februar 1996 & JP 07 287560 A (CANON INC), 31.Oktober 1995,

## Beschreibung

Die Erfindung betrifft ein Verfahren zur Reduzierung des Speicherbedarfs einer Datenbank sowie eine Vorrichtung zur Durchführung des Verfahrens.

Die geschickte Modellierung einer Datenbank ist insbesondere bei sehr großen anfallenden Datenmengen ein Problem. Ein anschauliches Beispiel ist der Wunsch oder die Notwendigkeit Telefon-Tarifinformationen oder andere individuell zuordenbare Informationseinheiten zu beliebigen Ort-Ort-Kombinationen weltweit bzw. wenigstens für ein größeres Land, beispielsweise Deutschland, abzuspeichern. Der hierfür verfügbare Speicherplatz sollte so gering wie möglich gehalten werden. Allein in Deutschland fallen jedoch bereits insgesamt 5604*5604 mögliche Vorwahlkombinationen an. Insgesamt also über 30 Millionen Datensätze. Jeder Datensatz besteht hierbei mindestens aus zwei Long-Integer-Werten ä 4 Byte allein für die Vorwahl, bis zu 25 Byte für den Ortsnamen und mindestens 4 Byte für die Zuordnung zu den einzelnen Tarifbereichen. Jeder Datensatz hat somit mindestens 4+4+25+4=37 Byte. Die gesamte Datenbank hätte mithin eine Größe von rund 1,1 Gbyte, noch ohne Berücksichtigung des sogenannten Overheads (Indexierung etc) der jeweils gewählten Datenbank. Durch geschickte Modellierung der Datenbank und klassische Kompressionstechnik ließe sich der Speicherbedarf auf ca. 100 Mbyte reduzieren. Es besteht der Wunsch für bestimmte weiter unten noch näher spezifizierte Datenbanksysteme den Speicherbedarf weiter zu reduzieren.

Aus DE 34 25 844 A1 ist ein Verfahren zum schnellen Auffinden von bestimmten, von einer Fernmeldevermittlungsanlage oder Datenverarbeitungsanlage produzierten Datensätzen in einem Datenspeicher bekannt. Das Verfahren sieht vor, daß beim Abspeichern der Datensätze in dem Datenspeicher gleichzeitig parallel dazu in einem besonderen Speicherbereich Suchbegriffe als sogenannte Schlüsselworte abgespeichert werden.
Beim weiteren Verarbeiten oder beim Ausdrucken der Datensätze wird jeweils beim Auffinden eines mit dem Suchbegriff übereinstimmenden Schlüsselwortes die Zählerstellung eines Adressierzählers zum seriellen Absuchen des besonderen Speicherbereichs dazu verwendet, den zugehörigen gesuchten Datensatz in einem Datenspeicher zu adressieren.

Ein anderes Suchverfahren für einen Datenspeicher ist aus der DE 39 08 684 A1 bekannt. Bei dem Verfahren sind in einem n-dimensionalen Koordinatensystem ein endlicher Verwaltungsbereich, ein innerhalb des Verwaltungsbereich liegender Suchbereich, sowie Suchobjekte vorgegeben, wobei die Suchobjekte ermittelt werden, die den Suchbereich schneiden.

Auch diese Verfahren lassen nur eine geringfügige Reduzierung des Speicherbedarfs zu.

Der Erfindung liegt daher die Aufgabe zugrunde, ein Verfahren und eine zur Durchführung des Verfahrens geeignete Vorrichtung anzugeben, mit denen bei bestimmten Datenbanken der Speicherbedarf über das bisher bekannte Maß hinaus reduziert werden kann.

Das erfindungsgemäße Verfahren zur Reduzierung des Speicherbedarfs einer Datenbank ist dadurch gekennzeichnet, daß zu speichernde Informationseinheiten den Schnittpunkten einer mindestens zweidimensionalen Rastermatrix zugeordnet werden, den in der Rastermatrix verorteten Informationseinheiten individuelle Farbwerte zugeordnet werden, und daß die so gebildete Bildmatrix als Datenbank oder als Teil einer Datenbank gespeichert wird, vorzugsweise nachdem die Bildmatrix einer Bildkompression unterworfen worden ist.

Die Rastermatrix wird durch Achsen aufgespannt und in einzelnen Achsenwerten können entweder durch Algorithmen oder durch eine Zuordnungstabelle festgelegte Informationsgehalte zugeordnet werden. Als Farbwerte innerhalb der Rasterbildmatrix kommt insbesondere die Verwendung der bekannten und festgelegten RGB-Farbwerte in Frage, so daß sich zur weiteren erheblichen Reduzierung des Speicherbedarfs klassische verlustfreie Kompressionsverfahren anwenden lassen.
Eine erfindungsgemäße Vorrichtung zur Durchführung des Verfahrens nach der Erfindung ist durch die Merkmale des Patentanspruchs 5 mit vorteilhaften Ausgestaltungsmöglichkeiten gemäß weiteren abhängigen Patentansprüchen gekennzeichnet.

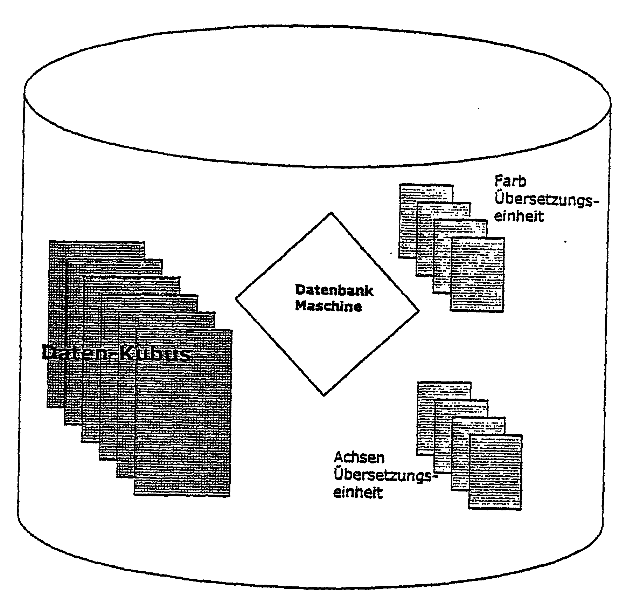

Unter Bezug auf die beigefügte Zeichnung wird die Erfindung auch anhand eines Ausführungsbeispiels näher erläutert.

Die Erfindung geht von dem Gedanken aus, daß sich beliebige Informationen als Farbwerte innerhalb eines mehrdimensionalen, beispielsweise eines zweidimensionalen Farbraums, der ein Bild definiert, interpretieren lassen. Komplexe Informationsbündel, z.B. Datenbanken oder umfangreiche Tabellen werden als Aneinanderreihung von Farbwerten, d.h. als Bilder, dargestellt. Die Farbwerte werden nicht in beliebiger Reihenfolge aneinandergereiht, sondern in Form einer mehrdimensionalen Matrix bzw. eines Koordinatensystems, wobei den Achsen ein eigener Informationsgehalt zugeordnet wird. Abgesehen von der mit dieser Farbwertumsetzung verbundenen Reduzierung lassen sich jetzt klassische verlustfreie Bildkompressionsmethoden auf die durch die Umsetzung entstandenen Bilder anwenden.

Klassische Datenbanken speichern Informationen üblicherweise in Tabellen, wobei die Spalten jeweils einen eigenen Informationsgehalt haben, die Zeilen jedoch (wenn überhaupt) identifizierend verwendet werden.

Aufgrund der Erfindung werden Kombinationen atomarer oder molekularer Informationseinheiten insbesondere als komplexe Farbwerte erzeugt bzw. interpretiert. Beispielsweise werden drei ASCII-Zeichen zu einem Farbwert kombiniert. Die Zuordnung der Farbwerte zu bestimmten Zeichenketten ist dabei entweder durch einen Algorithmus definiert oder durch Zuordnungstabellen, die wiederum ebenfalls als Bildinformation gespeichert werden können.

Mit Bezug auf das obige Beispiel einer Telefon-Tarifinformationsdatenbank werden beispielsweise der x-Achse einer zweidimensionalen Farbmatrix die Zielorte und der y-Achse die Ausgangsorte zugeordnet. Es wird also eine 5604*5604-Matrix aufgebaut. An den Schnittpunkten wird der entsprechende Tarifbereich eingetragen. Zusätzlich bedarf es eines Indexes der einer Matrixzeile bzw. -spalte eine Vorwahl zugeordnet wird. Die jeweilige Tarifinformation wird als Farbwert in die Matrix eingetragen. Das Ergebnis ist dann ein Bitmap mit insgesamt 5604*5604 und einer Farbtiefe von jeweils 4 Byte. Als Bitmap gespeichert beträgt der hierfür noch benötigte Speicherbedarf ca. 13 Mbyte. Da nunmehr jedoch eine Graphik vorliegt, lassen sich klassische Methoden für die verlustfreie Komprimierung von Graphiken problemlos anwenden. Legt man beispielsweise das PNG-Format zugrunde, so wird für die resultierende Datenbank letztlich nur noch ein Speicherbedarf von ca. 650 Kbyte benötigt, bei gleichzeitig schnellerer Zugriffsmöglichkeit auf einzelne Datensätze.

Die Zeichnung verdeutlicht in schematischer Darstellung die Einheiten oder den Aufbau einer Datenbank bei Anwendung des erfindungsgemäßen Verfahrens.

Vorgesehen ist - soweit eine mehrachsige Zuordnung zugrundegelegt wird - eine Achsenwert-Zuordnungseinheit oder Achsen-Übersetzungseinheit ATU (ATU = Axis Translation Unit). Diese ATU ordnet einer atomaren, molekularen oder einer Metainformation mittels eines Algorithmus oder einer Zuordnungstabelle einen bestimmten Achsenwert zu und transferiert diesen auch wieder zurück. Unter einer Metainformation kann man sich beispielsweise einen Zeiger auf einem Dokument oder in komplexeren Fällen ein "echtes" Bild vorstellen.

Bilder sind bekanntlich (in der Regel) zweidimensionale Anordnungen ("Verteilungen") einzelner Farbwerte. Ein Bild läßt sich also auch als Koordinatensystem verstehen, wobei im vorliegenden Zusammenhang von zwei -oder mehrdimensionalen Koordinatensystemen ausgegangen wird. in denen einzelne Farbwerte zu verorten sind. Im Falle von mehr als zweidimensionalen Koordinatensystemen kann man auch von Farbräumen sprechen.

Nimmt man als Beispiel ein zweidimensionales Koordinatensystem an, so läßt sich die der ATU zugrundeliegende Zuordnungsregel mit Bezug auf das obige Beispiel einfach darstellen:
"Nimm den Integerwert einer Vorwahl als Achsenwert",
wobei sich als Informationsraum dann die Menge aller Ausgangsorte bestimmt.

Die ATU selbst greift wiederum auf eine Farbwerte-Umsetzereinheit bzw. Farb-Übersetzungseinheit CTU (CTU = Colour Translation Unit) zu, welche die Zuordnung von bestimmten Informationen zu den Achsenwerten, also die Zuordnung von einzelnen Farbwerten zu den atomaren, molekularen oder Meta-Informations-einheiten und umgekehrt bestimmt.

Diese Zuordnung kann wiederum über Algorithmen oder aber über Zuordnungstabellen erfolgen. Dabei kommt folgender Grundgedanke zur Anwendung:

Farbwerte lassen sich bekanntermaßen als RGB-Werte beschreiben. Ein RGB-Wert stellt dabei den Anteil von Rot, Grün und Blau mittels jeweils und beispielsweise eines 8 Byte großen Werts dar (Dezimal: 0 bis 255). Die drei einzelnen Farbwerte werden in einen einzelnen RGB-Wert umgerechnet, z.B.
Rot = 255, Grün = 255, Blau = 255 → RGB = 16777215 oder
Rot = 65, Grün = 43, Blau = 0 → RGB = 11073.

Die Kombination der drei einzelnen Werte erfolgt dann durch bitweise Zusammensetzung der einzelnen Farbwerte zu einem 24 Byte Farbwert.
Beispiel: 255 entspricht 11111111. Damit ergibt sich der RGB-Wert (255, 255, 255) als Bitwert dargestellt zu: 11111111 11111111 11111111.

Wie das Beispiel veranschaulicht, werden also bestimmte Informationen in Farbwerte "übersetzt" und zwar
- entweder mittels einer festgelegten Zurordnungstabelle für einzelne Bitwerte,
- oder mittels einer Zuordnungstabelle für RGB-Werte zu atomaren, molekularen oder Metainformationen.
- oder mittels eines Algorithmus oder einer Zuordnungstabelle von atomaren, molekularen oder Metainformationen jeweils zu einem bestimmten Rot-, Grünund Blau-Wert.

In anderen Worten, die CTU ordnet also einer atomaren, molekularen oder einer Metainformation einen Farbwert, beispielsweise einen RGB-Wert zu. Dabei ist die Anwendung nicht auf die Erstellung von beispielsweise 24 Byte-RGB-Werten beschränkt, sondern läßt sich analog auf beliebige Farbwerte, beispielsweise 32 Byte RGB-Werte anwenden.

Dies sei anhand eines einfachen Beispiels für die CTU-Logik verdeutlicht:
"Setze einen Farbwert aus jeweils drei aufeinanderfolgenden ASCII-Werten zusammen".

Mit dieser einfachen Regel ließe sich etwa das Wort "Beispieltext" mittels einer Folge von Farbwerten zusammengesetzt aus vier Pixeln darstellen:
Beispieltext → (66,101,105)(115,112,105)(101,108,116)(101,120,116) → 6907202,6910067,7629925,7632997.

Verwendet man die Achsenwert-Zuordnungseinheit ATU in Verbindung mit der Farbwert-Umsetzereinheit CTU, so lassen sich auf einfache Weise bestimmte in klassischen Datenbanksystemen nicht verwendbare Achsen ebenfalls zur Speicherung zusätzlicher Information nutzen.

Die tatsächliche Speicherung der Daten oder Informationen erfolgt dann in Bildern oder Farbräumen in einer in der Zeichnung als Daten-Kubus bezeichneten Speicherbank.

Wie erwähnt, lassen sich im Falle eines zweidimensionalen Farbraums (Bild) klassische verlustfreie Kompressionsmethoden zur weiteren Komprimierung und Reduzierung des Speicherbedarfs anwenden. Im Falle von mehr als zweidimensionalen Farbräumen können diese entweder durch zweidimensionale Bilder simuliert werden oder es besteht die Möglichkeit entsprechende verlustfreie Kompressionsalgorithmen auf mehrdimensionale Farbräume anzupassen.

Schließlich ist zur Kommunikation mit der Außenwelt eine als Databank-Maschine bezeichnete Schnittstelle vorhanden, deren Hauptaufgabe die (Zwischen-)Speicherung und das Retrieval von Information ist. Diese Schnittstelle muß außerdem alle wesentlichen Funktionen klassischer Datenbanksysteme erfüllen; sie unterscheidet sich also lediglich in der Form der faktischen Realisierung.

Reduziert man ihre zusätzliche Funktion auf das wesentliche, dann ist der eigentliche Unterschied der, daß die im Rahmen der Erfindung erforderlichen Pixel-Werte über die Datenbank-Schnittstelle in mehrdimensionalen Farbräumen gelesen bzw. gesetzt werden müssen. Der elementare Verarbeitungsprozeß sieht dabei in der Regel wie folgt aus:
(1) Die CTU übersetzt die anfallenden Informationseinheiten in Farbwerte;
(2) die ATU (gegebenenfalls mehrfach vorhanden) verortet die Informationseinheiten (Farbwerte) wiederum in ihren jeweiligen Informationsräumen, und
(3) die Datenbank-Maschine setzt oder liest an der entsprechenden Stelle die im Datenspeicher (Daten-Kubus) durch die CTU ermittelten Farbwerte.

Die besonderen Vorteile der erfindungsgemäßen Datenbanklösung sind vor allem:
- Der Speicherplatzbedarf reduziert sich erheblich beispielsweise um den Faktor 100, also beispielsweise von 100 Mbyte auf 650 Kbyte.
- Der Datenbankzugriff wird schneller aufgrund der Architektur und der kleineren Datenbankgrößen.

Eine erste Reduzierung des Speicherplatzbedarfs erreicht man bereits durch die Verwendung der Farbwerte-Umsetzereinheit CTU; eine weitere wesentliche Reduzierung wird durch die zusätzliche Anwendung der Achsenwert-Zuordnungseinheit ATU erreicht.

Das erfindungsgemäße Verfahren bzw. der beschriebene Datenbankaufbau mit reduziertem Speicherbedarf eignet sich vor allem dort, wo sehr große Datenmengen anfallen oder für volumenabhängige Übertragungskosten, beispielsweise für die Bereiche "Video on Demand", "News on Demand", sowie für Internetübertragungen und dergleichen. Für diese Anwendungsbereiche lohnt sich der zusätzlich erforderte Datenbank-Modellierungsaufwand im Vergleich zu klassischen Datenbanksystemen. Gegenwärtig im Vordergrund des Anwendungsinteresses stehen weltweite Routing-Datenbanksysteme, insbesondere für Internet-Fax-Service, sowie die oben erwähnte Anwendung für Systeme zur Tarifinformation und Berechnung via Fahrkartenautomaten.

## Patentansprüche

1. Verfahren zur Reduzierung des Speicherbedarfs einer Datenbank, **dadurch gekennzeichnet, daß**
- zu speichernde Informationseinheiten den Schnittpunkten einer mindestens zweidimensionalen Rastermatrix zugeordnet werden,
- den in der Rastermatrix verorteten Informationseinheiten individuelle Farbwerte zugeordnet werden, und daß
- die so gebildete Bildmatrix als Datenbank oder Teil einer Datenbank gespeichert wird.

2. Verfahren nach Anspruch 1, **dadurch gekennzeichnet, daß** als Farbwerte komplexe RGB-Farbwerte verwendet werden.

3. Verfahren nach Anspruch 1 oder 2, **dadurch gekennzeichnet, daß** die Farbwerte der Bildmatrix vor ihrer Speicherung als Datenbank oder Teil einer Datenbank einem Bildkompressionsprozeß unterworfen werden.

4. Verfahren nach einem der Ansprüche 1 bis 3, **dadurch gekennzeichnet, daß** den Achsenwerten der Rastermatrix Algorithmen oder durch eine Zuordnungstabelle festgelegte Informationsgehalte zugeordnet werden.

5. Vorrichtung zur Durchführung des Verfahrens nach Anspruch 1 oder 2, **gekennzeichnet durch**
- eine Farbwerte-Umsetzereinheit (CTU), die mittels eines Algorithmus oder einer Zuordnungstabelle atomare, molekulare oder Metainformationseinheiten festgelegten Schnittpunkten einer Farbmatrix als einen jeweiligen Farbwert innerhalb des durch die Farbmatrix vorgegebenen Farbraums zuteilt,
- eine Speicherbank (Daten-Kubus) zur Speicherung der Farbwerte, und durch
- eine Schnittstelle (Databank-Maschine), die über die Farbwerte-Umsetzereinheit ermittelte Farbwerte setzt oder liest.

6. Vorrichtung nach Anspruch 5, **gekennzeichnet durch** eine Achsenwert-Zuordnungseinheit (ATU), die mittels eines Algorithmus oder einer Zuordnungstabelle atomare, molekulare oder Metainformationseinheiten vorgegebenen Achsenwerten eines der mehrdimensionalen Farbwertematrix entsprechenden Koordinatensystems zuordnet.

7. Vorrichtung nach Anspruch 5 oder 6, **gekennzeichnet durch** eine der Speicherbank zugeordnete Einrichtung zur verlustfreien Kompression der Farbwertematrix.

## Claims

1. Method for reducing the storage requirement of a database, **characterized in that**
- information units to be stored are assigned to the points of intersection of an at least two-dimensional raster matrix,
- individual colour values are assigned to the information units located in the raster matrix, and in that
- the image matrix thus formed is stored as database or part of a database.

2. Method according to Claim 1, **characterized in that** complex RGB colour values are used as colour values.

3. Method according to Claim 1 or 2, **characterized in that** the colour values of the image matrix are subjected to an image compression process prior to their storage as a database or part of a database.

4. Method according to one of Claims 1 to 3, **characterized in that** algorithms or information contents defined by an assignment table are assigned to the axis values of the raster matrix.

5. Apparatus for carrying out the method according to Claim 1 or 2, **characterized by**
- a colour value converter unit (CTU), which, by means of an algorithm or an assignment table, allocates atomic or molecular information units or meta-information units to defined points of intersection of a colour matrix as a respective colour value within the colour space predetermined by the colour matrix,
- a storage bank (data cube) for storing the colour values and by
- an interface (database engine) which sets or reads colour values determined via the colour value converter unit.

6. Apparatus according to Claim 5, **characterized by** an axis value assignment unit (ATU) which, by means of an algorithm or an assignment table, assigns atomic or molecular information units or meta-information units to predetermined axis values of a co-ordinate system corresponding to the multi-dimensional colour value matrix.

7. Apparatus according to Claim 5 or 6, **characterized by** a device for loss-free compression of the colour value matrix, which device is assigned to the storage bank.

## Revendications

1. Procédé pour réduire l'encombrement en mémoire d'une banque de données, **caractérisé en ce que**
- des unités d'informations à stocker sont attribuées aux intersections d'une matrice à au moins deux dimensions,
- des composantes trichromatiques individuelles sont attribuées aux unités d'informations localisées dans la matrice,
- et la matrice d'image ainsi formée est stockée comme banque de données ou comme partie d'une banque de données.

2. Procédé selon la revendication 1, **caractérisé en ce qu'**on utilise comme composantes trichromatiques des valeurs RVB complexes.

3. Procédé selon la revendication 1 ou 2, **caractérisé en ce que** les composantes trichromatiques de la matrice d'image sont soumises à un processus de compression d'images avant d'être stockées comme banque de données ou comme partie d'une banque de données.

4. Procédé selon l'une des revendications 1 à 3, **caractérisé en ce que** des algorithmes ou des contenus d'informations déterminés par un tableau d'attribution sont attribués aux valeurs d'axe de la matrice.

5. Dispositif pour la mise en oeuvre du procédé selon la revendication 1 ou 2, **caractérisé par**
- une unité de conversion de composantes trichromatiques (CTU) qui, à l'aide d'un algorithme ou d'un tableau d'attribution, attribue des unités d'informations atomiques ou moléculaires ou de méta-informations à des intersections déterminées d'une matrice de couleur, comme composante trichromatique à l'intérieur de l'espace de couleur prédéfini par la matrice de couleur,
- une banque de stockage (cube de données) pour le stockage des composantes trichromatiques, et
- une interface (machine de banque de données) qui place ou lit des composantes trichromatiques déterminées par l'unité de conversion de composantes trichromatiques.

6. Dispositif selon la revendication 5, **caractérisé par** une unité d'attribution de valeurs d'axe (ATU) qui, à l'aide d'un algorithme ou d'un tableau d'attribution, attribue des unités d'informations atomiques ou moléculaires ou de méta-informations à des valeurs d'axe prédéfinies de l'un des systèmes de coordonnées correspondant à la matrice de composantes trichromatiques à plusieurs dimensions.

7. Dispositif selon la revendication 5 ou 6, **caractérisé par** un appareil associé à la banque de stockage et destiné à une compression sans perte de la matrice de composantes trichromatiques.
